**Europäisches Patentamt**

**European Patent Office**

**Office européen des brevets**

(19)

(11) Veröffentlichungsnummer: **0 046 884**
**B1**

(12)

# EUROPÄISCHE PATENTSCHRIFT

(45) Veröffentlichungstag der Patentschrift:
20.03.85

(51) Int. Cl.⁴: **F 16 D 65/56, F 16 D 55/10**

(21) Anmeldenummer: **81105990.6**

(22) Anmeldetag: **30.07.81**

(54) **Vollbelag-Scheibenbremse.**

(30) Priorität: **30.08.80 DE 3032828**

(43) Veröffentlichungstag der Anmeldung:
**10.03.82 Patentblatt 82/10**

(45) Bekanntmachung des Hinweises auf die Patenterteilung:
**20.03.85 Patentblatt 85/12**

(84) Benannte Vertragsstaaten:
**AT DE FR GB IT NL SE**

(56) Entgegenhaltungen:
**DE - A - 2 508 771**
**DE - A - 2 646 870**
**DE - A - 2 734 518**

(73) Patentinhaber: **WABCO Westinghouse**
**Fahrzeugbremsen GmbH, Am Lindener**
**Hafen 21 Postfach 91 12 80, D-3000 Hannover 91 (DE)**

(72) Erfinder: **Feldmann, Joachim, Auf dem Papenberg 8,**
**D-3057 Neustadt 2 (DE)**
Erfinder: **Oberländer, Andreas, Erythropelstrasse 24,**
**D-3000 Hannover 81 (DE)**

(74) Vertreter: **Schrödter, Manfred, WABCO Westinghouse**
**Fahrzeugbremsen GmbH Am Lindener**
**Hafen 21 Postfach 91 12 80, D-3000 Hannover 91 (DE)**

# Beschreibung

Die Erfindung betrifft eine Vollbelag-Scheibenbremse, insbesondere druckmittelbetätigte Vollbelag-Scheibenbremse für Kraftfahrzeuge, gemäss dem Oberbegriff des Anspruchs 1.

Eine Scheibenbremse dieser Art mit einer automatischen Nachstelleinrichtung, welche die durch Abnutzung der Bremsbeläge entstehende Leer-Hubvergrösserung automatisch ausgleicht, ist durch die DE-A-2 508 771 bekannt.

Bei dieser bekannten Scheibenbremse ist die Reibkraftabhängigkeit der Nachstellungen infolge der Notwendigkeit, dass die Nachstellglieder zum Einleiten eines Nachstellschrittes von einer Feder oder von einer Druckkraft bewegt werden müssen, problematisch, da durch Schmutz oder Korrosion derart hohe Reibkräfte entstehen können, dass die Nachstellglieder nicht mehr beweglich sind und eine automatische Nachstellung ausfallen kann.

Eine weitere Schwierigkeit ist bei der bekannten Scheibenbremse darin zu sehen, dass ein Nachstellschritt auch bei einem maximalen Kolbenhub ausgelöst werden kann, wodurch ein gross bemessener Rückhub erforderlich ist. Es muss dabei berücksichtigt werden, dass die Nachstellung bei einer Vollbremsung mit gleichzeitiger maximaler und thermischer Gehäuseausdehnung eingeleitet wird. Für diese Bremssituation muss der Rückhub eingeplant werden, der so gross bemessen ist, dass bei Rückstellung der elastischen und thermischen Spreizung die Zuspanneinrichtung nicht eingeklemmt wird, sondern ein Rest-Lüftspiel erhalten bleibt. Obwohl im überwiegenden Fall der Nachstellschritt auch bei Normalbremsungen erreicht wird, muss eine Auslegung der Einrichtung mit dem für eine Maximal-Bremsung beschriebenen Rückhub erfolgen, wodurch zwangsläufig ein grösserer Zuspannweg des Kolbens und ein damit einhergehender höherer Energieverbrauch in Kauf genommen werden muss.

Der Erfindung liegt deshalb die Aufgabe zugrunde, eine Vollbelag-Scheibenbremse der eingangs erwähnten Art mit einer automatischen Nachstelleinrichtung für Bremsbelagverschleiss zu schaffen, welche die beschriebenen Nachteile der bekannten Nachstelleinrichtung nicht aufweist.

Diese Aufgabe wird durch die im Patentanspruch 1 angegebene Erfindung gelöst.

Die erfindungsgemässe Auslegung der Nachstelleinrichtung bewirkt eine stufenlose Nachstellung der Scheibenbremse, wobei die Kräfte zur Betätigung des Nachstellvorganges vom Bremskolben aufgebracht werden und somit wesentlich grössere Kräfte zur Wirkung kommen, welche durch Verschmutzung oder durch Korrosion eventuell festsitzende Teile leichter lösen.

Der Nachstellpunkt ist auf den Beginn der Kraftübertragung festgelegt, so dass der Nachstellvorgang beendet ist, wenn sich die Bremskräfte aufzubauen beginnen. Die anschliessende elastische und thermische Gehäuseausdehnung führt zu keiner Vergrösserung des Nachstellschrittes, so dass der vorzugebende Kolben-Rückhub und das damit verbundene Lüftspiel klein gehalten werden kann.

Bei jeder Bremsung kann sich zwangsläufig ein Nachstellschritt vollziehen, was eine sich in kleinen Schritten vollziehende kontinuierliche Nachstellung gewährleistet.

Die Erfindung wird nachfolgend anhand von Ausführungsbeispielen, die in der Zeichnung dargestellt sind, näher erläutert.

Es zeigen:

Fig. 1a und 1b eine druckluftbetätigte Scheibenbremse mit einer über Schrägflächen wirkenden Verschleissnachstellung,

Fig. 2 einen Teilausschnitt der Fig. 1 (Spannbandbefestigung),

Fig. 3 eine Seitenansicht der Fig. 2 und

Fig. 4a und 4b eine Scheibenbremse gemäss Fig. 1, jedoch mit einer über Kniehebel wirkenden Verschleissnachstellung.

Ein aus zwei Bremsscheiben 1, 2 bestehendes Gehäuse einer Vollbelagscheibenbremse ist mittels Schrauben an der Nabe einer nicht dargestellten Fahrzeugachse befestigt. Die feststehenden Teile der Bremse bestehen aus Bremsringen 3, 4 mit daran befestigten, beim Bremsen mit den umlaufenden Bremsscheiben 1, 2 in Reibschluss stehenden Bremsbelägen 5, 6, welche in Umlaufrichtung fest, axial frei beweglich an einem Bremsträger 7 aufgehängt sind, der an einem nicht dargestellten Achsflansch befestigt ist.

Die Betätigungseinrichtung der Bremse besteht aus einer zwischen den Bremsringen 3, 4 gelagerten Spreizeinrichtung, welche aus einem Ringzylinder 8 und aus einem in diesem axial beweglich gelagerten, durch Dichtringe abgedichteten Ringkolben 9, 17 gebildet ist.

Eine zwischen dem Ringzylinder 8 und dem Ringkolben 9, 17 angeordnete Ringkammer 10 steht mit ihrem Anschluss 11 mit einem nicht dargestellten Bremsventil in Verbindung.

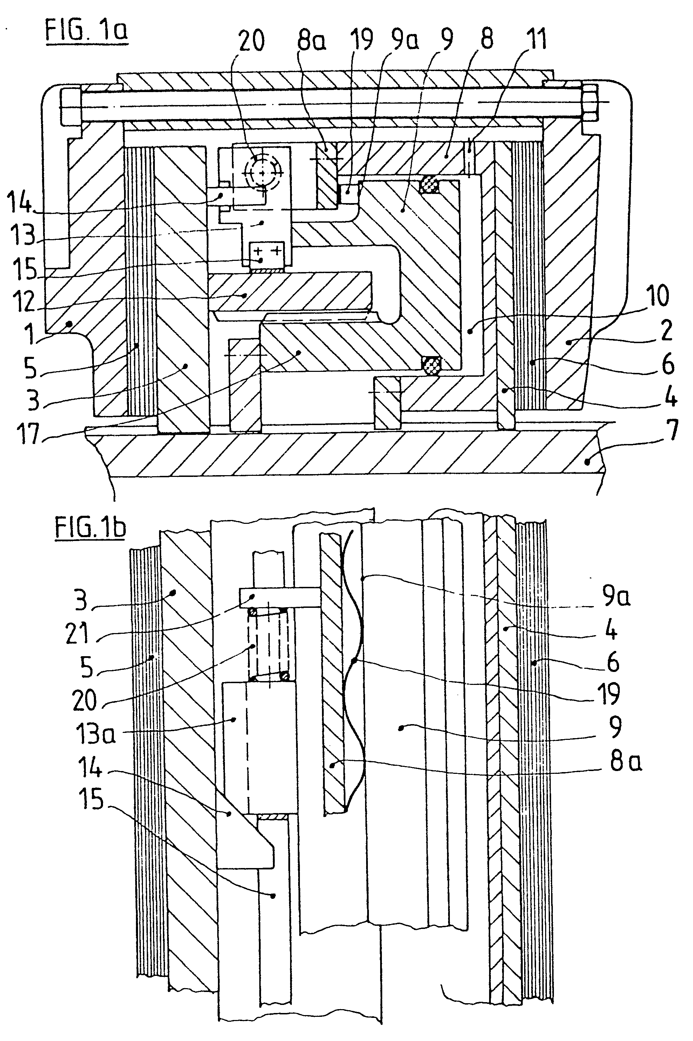

Eine im wesentlichen aus einer Gewindehülse 12 und aus einem Übertragungsglied 13, 13a bestehende automatische Nachstelleinrichtung ist zwischen den Ringkolben 9, 17 und den diesem Ringkolben 9, 17 zugeordneten Bremsring 3 geschaltet. Das vom Hub des Ringkolbens 9, 17 axial verschiebbare Übertragungsglied besteht aus drei Einzelelementen 13a, die auf dem Umfang eines Ringes 13 gleichmässig verteilt angeordnet sind. Die drei Elemente 13a des Übertragungsgliedes 13, 13a sind mit ersten schrägen Gleitflächen versehen, welche mit entsprechend ausgebildeten zweiten schrägen Gleitflächen von Ausbildungen 14 des Bremsringes 3 in Eingriff stehen (vgl. Fig. 1b).

An einem der Elemente 13a ist eine um die Gewindehülse 12 angeordnete, als Spannband 15 ausgebildete Kupplung befestigt, wodurch die bei einer Hubbewegung des Ringkolbens 3 durch das Aufeinanderabgleiten der beiden schrägen Gleitflächen an den Teilen 13a, 14 entstehende Bewegung in Umfangsrichtung auf die Gewindehülse 12 übertragbar ist. Das Spannband 15 ist mittels einer an einem der Befestigungsenden angeordneten Feder 16, die sich ihrerseits am Übertragungsglied 13, 13a abstützt, vorgespannt. Das am Innendurchmesser der Gewindehülse 12 befindliche Gewinde greift in ein entsprechendes Gewinde einer Ausbildung 17 des Ringkolbens 9, 17 ein, so dass ein Hub des Ringkolbens 9, 17 über die schrägen Gleitflächen 13a, 14 und über das Spannband 15 eine entsprechende Hubbewegung der Gewindehülse 12 in axialer Richtung zum Bremsring 3 hin bewirkt.

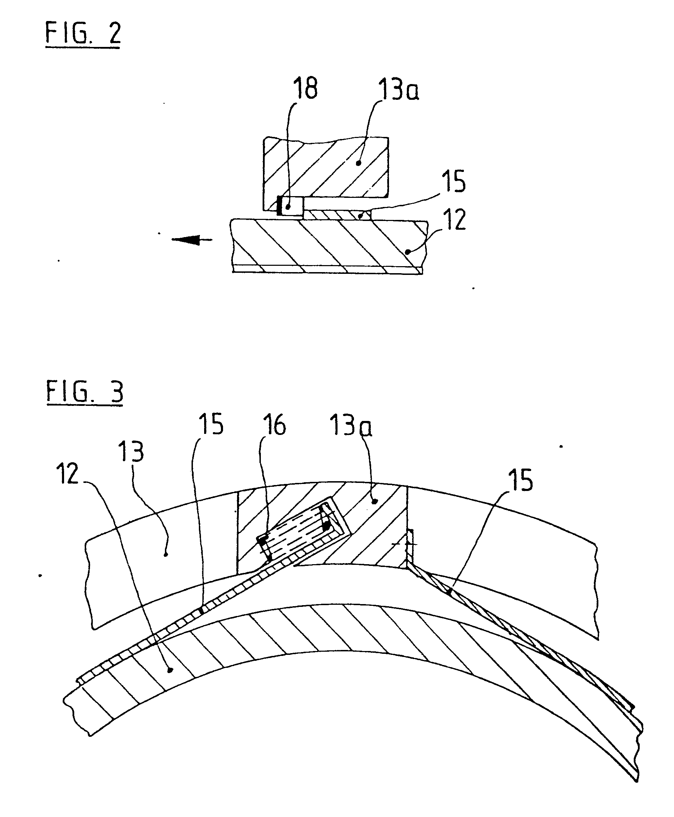

Eine zwischen dem Spannband 15 und dem Ring 13 angeordnete ringförmige Wellfeder 18 (vgl. Fig. 2) ist für die Rückkehr des Spannbandes 15 nach der Axialbewegung der Gewindehülse 12 in seine ursprüngliche Lage vorgesehen.

Zur Stabilisierung des Ringkolbens 9, 17 bei Bremslösestellung ist zwischen einer Stirnfläche 9a des Ringkolbens 9, 17 welche der die Kammer 10 bildenden Stirnfläche gegenüberliegt, und einer senkrecht verlaufenden stegförmigen Ausbildung 8a des Ringzylinders 8 eine als Rückholfeder wirkende Wellfeder 19 angeordnet.

Eine am Aussendurchmesser des Übertragungsgliedes 13, 13a in Umfangsrichtung wirkende Rückholfeder 20 ist als Rückstellmittel für eine Drehung des Übertragungsgliedes 13 in Umfangsrichtung vorgesehen. Ein an der senkrechten Ausbildung 8a des Ringzylinders 8 befindlicher Quersteg 21 und eine Anlagefläche am Ring 13 bzw. Element 13a dienen zur Abstützung der Rückholfeder 20.

Die Funktion der automatischen Nachstelleinrichtung ist wie folgt:

Beim Betätigen eines Bremsventils wird die Kammer 10 über den Anschluss 11 mit Druckluft beaufschlagt. Auf der einen Seite wird durch die Hubbewegung des Bremszylinders 8 der Bremsbelag 6 gegen die umlaufende Bremsscheibe 2 gepresst, und auf der anderen Seite bewirkt die Hubbewegung des Ringkolbens 9, 17 eine Anpressung des Bremsbelages 5 gegen die umlaufende Bremsscheibe 1.

Bereits vor Einsetzen der Bremswirkung wird durch die Hubbewegung des Ringkolbens 9, 17 das Übertragungsglied 13, 13a in axialer Richtung bewegt. Die Elemente 13a gleiten dabei mit ihren ersten schrägen Gleitflächen an den zweiten schrägen Gleitflächen der Ausbildung 14 des Bremsringes 3 ab und erfahren zusätzlich eine Bewegungskomponente in Umfangsrichtung. Das an dem Übertragungsglied 13, 13a befestigte und um die Gewindehülse 12 angeordnete Spannband 15 spannt sich durch die Drehbewegung des Ringes 13 um die Gewindehülse 12 und überträgt somit diese Drehbewegung auf die Gewindehülse 12, welche dadurch zusätzlich zum Hub des Ringkolbens 9, 17 in gleicher axialer Richtung bewegt wird, bis sie zur Anlage an den Bremsring 3 kommt. Durch den Kraftfluss zwischen dem Ringkolben 9, 17 der Gewindehülse 12 und dem Bremsring 3 wird die Drehbewegung bzw. der Nachstellvorgang beendet.

Nach der Bremsung bzw. nach Entlüften der Kammer 10 wird der Ringkolben 9, 17 durch die Spannung der Wellfeder 19 in seine Ausgangslage zurückgedrückt. Dabei wird das Übertragungsglied 13, 13a durch die Spannung der Rückholfeder 20 in Umfangsrichtung gedreht, bis die Schrägflächen der Teile 13, 14 wieder zur Anlage kommen. Bei dieser Drehung löst sich das Spannband 15 von der Gewindehülse 12, so dass sich diese nicht zurückdreht (beeinflussbar durch Gewindereibung, Spannbandaufhängung). Gleichzeitig verschiebt die Wellfeder 18 das Spannband 15 in axialer Richtung in die ursprüngliche Lage bezüglich des Ringes 13 zurück.

Bei einem zwischen der Gewindehülse 12 und dem Bremsring 3 infolge Belagverschleiss entstehenden grösseren Spiel vollzieht sich bei einer Bremsung immer wieder der beschriebene Nachstellvorgang.

Während einer Drehung des Übertragungsgliedes 13, 13a und der dabei über das Spannband 15 übertragenen Drehbewegung auf die Gewindehülse 12 verschiebt sich die Gewindehülse 12 gegen das Übertragungsglied 13, 13a axial in Pfeilrichtung gemäss Fig. 2.

Damit bei Einleitung der Drehbewegung der Schlupf zwischen dem Übertragungsglied 13, 13a und der Gewindehülse 12 möglichst klein bleibt, ist der Einbau der weiteren Feder 16 an einem Ende des Spannbandes 15 vorgesehen, um das Spannband 15 durch die Kraft dieser Feder 16 in Umfangsrichtung vorzuspannen.

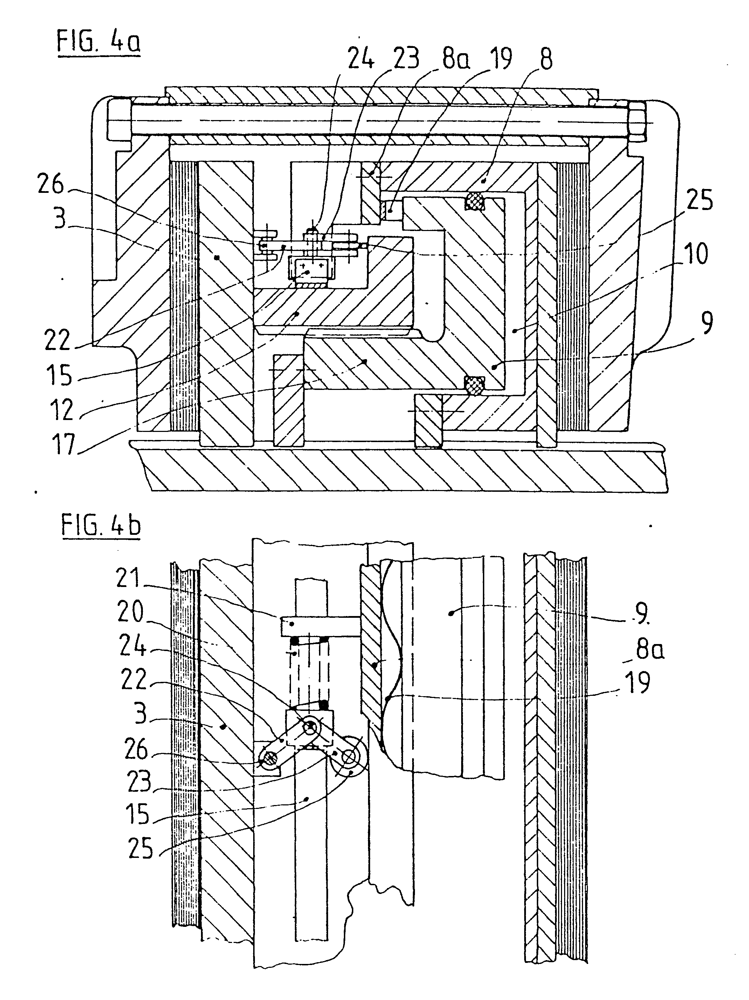

In dem in Fig. 4 dargestellten Ausführungsbeispiel werden die schrägen Gleitflächen 13, 14 in Fig. 1 durch einen Kniehebelmechanismus ersetzt, welcher aus zwei Kniehebelarmen 22, 23, einem die beiden Hebel 22, 23 gelenkig verbindenden Verbindungsbolzen 24 und aus einer am Ende des ersten Kniehebelarmes 23 befestigten Rolle 25 gebildet wird, wobei dieser Kniehebelmechanismus einseitig mit dem Ende 26 des zweiten Kniehebelarmes 22 drehbar gelagert am Bremsring 3 befestigt ist. Das Spannband 15 ist an dem Verbindungsbolzen 24 der beiden Kniehebelarme 22, 23 befestigt. Die Drehbewegung der Gewindehülse 12 wird hier statt von schrägen Gleitflächen durch die Veränderung der Winkelstellung der beiden Kniehebelarme 22, 23 erzielt, wobei über das am Verbindungsbolzen 24 angelenkte Spannband die Drehbewegung der Gewindehülse 12 bewirkt wird. Die weitere Funktion erfolgt mittels der anhand der Fig. 1 beschriebenen gleichen Bauteile, welche in der Fig. 4 mit denselben Bezugszeichen wie in Fig. 1 versehen sind.

**Patentansprüche**

1. Vollbelag-Scheibenbremse, insbesondere druckmittelbetätigte Vollbelag-Scheibenbremse für Kraftfahrzeuge, die folgende Merkmale umfasst:

a) zwischen zwei mit einer Nabe verschraubten Bremsscheiben (1, 2) sind zwei je einer Bremsscheibe zugeordnete, mit Bremsbelägen (5, 6) versehene Bremsringe (3, 4) angeordnet;

b) zwecks Anpressen der Bremsbeläge (5, 6) an die Bremsscheiben (1, 2) ist zwischen den Bremsringen (3, 4) eine aus mindestens zwei jeweils einem Bremsring zugeordneten Spreizelementen (8, 9, 12, 17) bestehende, als Spreizeinrichtung ausgelegte Bremsbetätigungseinrichtung angeordnet;

c) wenigstens eines der Spreizelemente (8, 9, 12, 17) ist wenigstens zweiteilig und verlängerbar;

d) das zweiteilige und verlängerbare Spreizelement (9, 12, 17) besteht aus einem drehfest gelagerten Teil (9, 17) und einer Gewindehülse (12), welche über ein Gewinde axial kraftschlüssig, jedoch gegeneinander verdrehbar verbunden sind, wobei die Verlängerung durch Drehung der Gewindehülse (12) erfolgt;

e) zwecks Nachstellung eines durch Belagverschleiss entstandenen grösseren Leer-Spreizhubs der Spreizelemente (8, 9, 12, 17) ist mindestens eine Nachstelleinrichtung mit einem ringförmigen Übertragungsglied (13, 13a, 22, 23, 24, 25) vorgesehen, dadurch gekennzeichnet, dass die Nachstelleinrichtung folgende Merkmale aufweist:

f) das ringförmige Übertragungsglied (13, 13a, 22, 23, 24, 25) ist so angeordnet, dass bei Bremsbetätigung das zweiteilige Spreizelement (9, 12, 17) zunächst mit seinem drehfest gelagerten Teil (9, 17) das Übertragungsglied (13, 13a, 22, 23, 24, 25) mitnimmt und nach Anlegen der Gewindehülse (12) an den zugeordneten Bremsring (3) mit der Gewindehülse (12) die Bremsbetätigungskraft auf den Bremsring (3) überträgt, wobei die Mitnahme des Übertragungsgliedes (13, 13a, 22, 23, 24, 25) durch Anlegen der Gewindehülse (12) an den Bremsring (3) beendet wird;

g) es sind Rückstellmittel vorgesehen, welche bei Rückbewegung des Spreizelementes (9, 12, 17) das Übertragungsglied (13, 13a, 22, 23, 24, 25) in seine Ausgangslage zurückbewegen;

h) an dem Übertragungsglied (13, 13a, 22, 23, 24, 25) ist eine nur in Nachstellrichtung wirksame Kupplung (15) angelenkt, welche während der Mitnahme des Übertragungsgliedes (13, 13a, 22, 23, 24, 25) das Übertragungsglied (13, 13a, 22, 23, 24, 25) und die Gewindehülse (12) derart miteinander kuppelt, dass die Gewindehülse (12) in Nachstellrichtung gedreht und dadurch das zweiteilige Spreizelement (9, 12, 17) zur Nachstellung verlängert wird.

2. Vollbelag-Scheibenbremse nach Anspruch 1, gekennzeichnet durch folgendes Merkmal: zwischen dem Übertragungsglied (13, 13a, 22, 23, 24, 25) und dem Bremsring (3) sind Umlenkmittel (13a, 14, 22, 23, 24, 25) angeordnet, über die das Übertragungsglied (13, 13a, 22, 23, 24, 25) bei Mitnahme durch das Spreizelement (9, 12, 17) in Nachstellrichtung gedreht und bei Rückkehr des Spreizelementes (9, 12, 17) zurückbewegt wird.

3. Vollbelag-Scheibenbremse nach Anspruch 2, dadurch gekennzeichnet, dass die Umlenkmittel zur Drehung und Rückbewegung des Übertragungsgliedes (13, 13a) folgende Merkmale aufweisen:

a) die dem Bremsring (3) zugewandte Ringstirnfläche des Übertragungsgliedes (13, 13a) ist mit ersten schrägen Gleitflächen versehen;

b) die dem Übertragungsglied (13, 13a) zugewandte Fläche des Bremsringes (3) ist mit zweiten schrägen Gleitflächen (14) versehen, die mit den ersten Gleitflächen in Eingriff stehen.

4. Vollbelag-Scheibenbremse nach Anspruch 2, dadurch gekennzeichnet, dass die Umlenkmittel zur Drehung und Rückbewegung des Übertragungsgliedes (22, 23, 24, 25) folgende Merkmale aufweisen:

a) die Umlenkmittel (22, 23, 24, 25) sind als Kniehebelmechanismus ausgebildet, welcher aus zwei mittels eines Verbindungsbolzens (24) verbundenen Kniehebelarmen (22, 23) und aus einer am Ende des einen Kniehebelarmes (23) befestigten Rolle (25) besteht;

b) die dem Spreizelement (9, 12, 17) zugewandte Seite des Kniehebelmechanismus (22, 23, 24, 25) steht über die Rolle (25) in Wirkverbindung mit diesem Spreizelement;

c) die dem Bremsring (3) zugewandte Seite des Kniehebelmechanismus (22, 23, 24, 25) ist mit dem Ende (26) des anderen Kniehebelarmes (22) drehbar an diesem Bremsring (3) befestigt.

5. Vollbelag-Scheibenbremse nach einem der vorhergehenden Ansprüche, gekennzeichnet durch folgendes Merkmal: Die Kupplung (15) besteht aus einem die Gewindehülse (12) umfassenden Spannband.

6. Vollbelag-Scheibenbremse nach einem der vorhergehenden Ansprüche, gekennzeichnet durch folgendes Merkmal: Das in axialer Richtung verlaufende, die Wirkverbindung mit der Gewindehülse (12) herstellende Gegengewinde ist an einer Ausbildung (17) des drehfest gelagerten Teils (9, 17) des Spreizelementes (9, 12, 17) angeordnet.

7. Vollbelag-Scheibenbremse nach einem der vorhergehenden Ansprüche, gekennzeichnet durch folgende Merkmale:

a) Die Bremsbetätigungseinrichtung besteht aus dem als Ringzylinder (8) ausgebildeten Spreizelement (8) und dem als darin axial verschiebbarer, durch Dichtringe abgedichteter Ringkolben (9, 12, 17) ausgebildeten wenigstens zweiteiligen und verlängerbaren Spreizelement (9, 12, 17);

b) eine zwischen dem Ringzylinder (8) und dem Ringkolben (9, 12, 17) angeordnete Ringkammer (10) ist mit Druckmitteln beaufschlagbar;

c) zwischen einer Stirnfläche (9a) des Ringkolbens (9, 12, 17), welche der die Kammer (10) bildenden Ringfläche des Ringkolbens (9, 12, 17) gegenüberliegt und einer Ausbildung (8) des Ringzylinders (8) ist eine Wellfeder (19) angeordnet, deren Spannung in Richtung «Bremslösestellung» der Bremsbetätigungseinrichtung gerichtet ist.

8. Vollbelag-Scheibenbremse nach einem der vorhergehenden Ansprüche, gekennzeichnet durch folgende Merkmale:

a) Als Rückstellmittel ist mindestens eine in Umfangsrichtung auf das Übertragungsglied (13, 13a bzw. 22, 23, 24, 25) wirkende Rückholfeder (20) am Aussendurchmesser des Übertragungsgliedes (13, 13a bzw. 22, 23, 24, 25) angeordnet;

b) die Rückholfeder (20) stützt sich zwischen einer stegförmigen Ausbildung (21) des Ringzylinders (8) und einer Anlagefläche des Übertragungsgliedes (13, 13a bzw. (22, 23, 24, 25) ab.

9. Vollbelag-Scheibenbremse nach einem der Ansprüche 5–8, gekennzeichnet durch folgendes Merkmal: Zwischen dem Spannband (15) und dem Übertragungsglied (13, 13a bzw. 22, 23, 24, 25) ist eine ringförmige Wellfeder (18) vorgesehen.

10. Vollbelag-Scheibenbremse nach einem der Ansprüche 5–9, gekennzeichnet durch folgendes Merkmal: Zwecks Vorspannung des Spannbandes (15) ist an einem Befestigungsende des Spannbandes (15) mit dem Übertragungsglied (13, 13a bzw. 22, 23, 24, 25) eine Feder (16) angeordnet.

11. Vollbelag-Scheibenbremse nach einem der Ansprüche 5–10, gekennzeichnet durch folgende Merkmale:

a) Das mit den ersten schrägen Gleitflächen versehene Übertragungsglied (13, 13a) besteht aus drei mittels eines Ringes (13) fest miteinander verbundenen, auf dem Umfang dieses Ringes (13) gleichmässig verteilten Einzelelementen (13a);

b) das Spannband (15) ist an einem der drei Einzelelemente (13a) befestigt.

**Claims**

1. Fully-lined disc brakes, especially pressure medium actuated fully lined disc brakes for vehicles, comprising the following features:

a) two brake rings (3, 4), each of which is associated with one brake disc and is provided with brake linings (5, 6), are arranged between two brake discs (1, 2) which are screwed to a hub;

b) for the purpose of pressing the brake linings (5, 6) against the brake discs (1, 2), there is arranged between the brake rings (3, 4) a brake actuating arrangement designed as an expansion arrangement and comprising at least two expansion elements (8, 9, 12, 17) each associated with one brake ring;

c) at least one of the expansion elements (8, 9, 12, 17) is in at least two parts and is extensible;

d) the two-part extensible expansion element (9, 12, 17) comprises a part (9, 17) mounted so that it cannot turn and a threaded casing (12) which are axially connected via a thread so that they are positively locked but can turn with respect to one another, the extension being effected by turning the threaded casing (12);

e) for the purpose of adjusting a relatively large idle expansion travel of the expansion elements (8, 9, 12, 17) resulting from wear of the lining, at least one adjusting device having an annular transmission member (13, 13a, 22, 23, 24, 25) is provided, characterised in that the adjusting device has the following features:

f) the annular transmission member (13, 13a, 22, 23, 24, 25) is so arranged that, when the brake is actuated, the two-part expansion element (9, 12, 17) initially carries along the transmission member (13, 13a, 22, 23, 24, 25) together with its part (9, 17) mounted so that it cannot turn and, after the threaded casing (12) comes to rest against the associated brake ring (3), transfers the brake actuating force by means of the threaded casing (12) onto the brake ring (3), the associated movement of the transmission member (13, 13a, 22, 23, 24, 25) terminating as a result of the threaded casing (12) coming to rest against the brake ring (3);

g) restoring means are provided which, when the expansion element (9, 12, 17) returns, moves the transmission member (13, 13a, 22, 23, 24, 25) back into its initial position;

h) there is linked to the transmission member (13, 13a, 22, 23, 24, 25) a coupling (15) that is effective only in the adjusting direction and which, during the associated movement of the transmission member (13, 13a, 22, 23, 24, 25) couples the transmission member (13, 13a, 22, 23, 24, 25) and the threaded casing (12) together in such a manner that the threaded casing (12) turns in the adjusting direction and in that manner the two-part expansion element (9, 12, 17) is extended for adjustment.

2. Fully lined disc brake according to claim 1, characterised by the following feature: there are arranged between the transmission member (13, 13a, 22, 23, 24, 25) and the brake ring (3) turning means (13a, 14, 22, 23, 24, 25) via which the transmission member (13, 13a, 22, 23, 24, 25) is turned in the adjusting direction when carried along by the expansion element (9, 12, 17) and is moved back when the expansion element (9, 12, 17) returns.

3. Fully lined brake disc according to claim 2, characterised in that the turning means for turning and moving back the transmission member (13, 13a) has the following features:

a) the annular end face of the transmission member (13, 13a) that faces the brake ring (3) is provided with first oblique sliding faces;

b) the face of the brake ring (3) facing the transmission member (13, 13a) is provided with second oblique sliding faces (14) which are in contact with the first sliding faces.

4. Fully lined brake disc according to claim 2, characterised in that the turning means for turning and moving back the transmission member (22, 23, 24, 25) has the following features:

a) the turning means (22, 23, 24, 25) are constructed as a toggle lever mechanism which comprises two toggle lever arms (22, 23) connected by means of a connecting bolt and a roller (25) secured at the end of one of the toggle lever arms (23);

b) the side of the toggle lever mechanism (22, 23, 24, 25) facing the expansion element (9, 12, 17) is in effective connection with this expansion element via the roller (25);

c) the side of the toggle lever mechanism (22, 23, 24, 25) facing the brake ring (3) is rotatably connected by the end (26) of the other toggle lever arm (22) to this brake ring (3).

5. Fully lined disc brake according to one of the preceding claims, characterised by the following feature: the coupling (15) comprises a tension strap encompassing the threaded casing (12).

6. Fully lined disc brake according to one of the preceding claims, characterised by the following feature: the co-operating thread running in the axial direction and forming the effective connection with the threaded casing (12) is arranged on a projection (17) of the part (9, 17) mounted so that it cannot turn of the expansion element (9, 12, 17).

7. Fully lined disc brake according to one of the preceding claims, characterised by the following features:
a) the brake actuating device comprises the expansion element (8) constructed as the annular cylinder (8) and the at least two-part extensible expansion element (9, 12, 17) constructed as the annular piston (9, 12, 17) that is axially displaceable in the annular cylinder and is sealed by sealing rings;
b) an annular chamber (10) arranged between the annular cylinder (8) and the annular piston (9, 12, 17) can be acted upon by pressure media;
c) there is arranged between an end face (9a) of the annular piston (9, 12, 17), which face lies opposite the annular face of the annular piston (9, 12, 17) forming the chamber (10), and a projection (8) of the annular cylinder (8) a wavy spring (19), the force of which is arranged in the direction «brake release position» of the brake actuating device.

8. Fully lined disc brake according to one of the preceding claims, characterised by the following features:
a) as restoring means there is arranged on the external diameter of the transmission member (13, 13a, or 22, 23, 24, 25) at least one return spring working on the transmission member (13, 13a or 22, 23, 24, 25) in the circumferential direction;
b) the return spring (20) is supported between a projection (21) of the annular cylinder (8) in the form of a crosspiece and an abutment of the transmission member (13, 13a or 22, 23, 24, 25).

9. Fully lined disc brake according to one of claims 5 to 8, characterised by the following feature: an annular wavy spring (18) is provided between the tension strap (15) and the transmission member (13, 13a or 22, 23, 24, 25).

10. Fully lined disc brake according to one of claims 5 to 9, characterised by the following feature: for the purpose of pretensioning the tension strap (15), a spring (16) is arranged at one fastening end of the tension strap (15) having the transmission member (13, 13a or 22, 23, 24, 25).

11. Fully lined disc brake according to one of claims 5 to 10, characterised by the following features:
a) the transmission element (13, 13a) provided with the first oblique sliding faces comprises three individual elements (13a) that are rigidly connected one to the other by means of a ring (13) and are uniformly distributed over the circumference of this ring (13);
b) the tension strap (15) is secured to one of the three individual elements (13a).

## Revendications

1. Frein à disque à garniture totale, notamment frein à disque à garniture totale actionné par un fluide sous pression, pour véhicules automobiles, qui présente les caractéristiques suivantes:
a) entre deux disques de frein (1, 2) assemblés à un moyeu par des vis, sont disposées deux couronnes de frein (3, 4) associées chacune à un disque de frein et munies de garnitures de frein (5, 6);
b) pour presser les garnitures de frein (5, 6) contre les disques de frein (1, 2), il est prévu un dispositif d'actionnement du frein agencé entre les couronnes de frein (3, 4), composé d'au moins deux éléments écarteurs (8, 9, 12, 17) associés chacun à une couronne de frein, et réalisé sous la forme d'un dispositif écarteur;
c) au moins l'un des éléments écarteurs (8, 9, 12, 17) est au moins en deux parties et extensible;
d) l'élément écarteur (9, 12, 17) qui est en deux parties et extensible est composé d'une partie (9, 17) bloquée en rotation et d'un manchon fileté (12), qui sont assemblés, par l'intermédiaire d'un filetage, avec liaison par action de force dans la direction axiale mais avec possibilité de rotation l'une par rapport à l'autre, l'allongement se produisant par la rotation du manchon fileté (12);
e) pour le rattrapage d'une course d'écartement à vide relativement grande des éléments écarteurs (8, 9, 12, 17) résultant de l'usure des garnitures, il est prévu au moins un dispositif de rattrapage comprenant un organe de transmission annulaire (13, 13a, 22, 23, 24, 25), caractérisé en ce que le dispositif de rattrapage présente les caractéristiques suivantes:
f) l'organe de transmission annulaire (13, 13a, 22, 23, 24, 25) est agencé de manière que, lors d'un actionnement du frein, l'élément écarteur en deux parties (9, 12, 17) entraîne tout d'abord l'organe de transmission (13, 13a, 22, 23, 24, 25) par sa partie (9, 17) bloquée en rotation et, qu'après la mise en appui du manchon fileté (12) contre la couronne de frein (3) correspondante, il transmette la force d'actionnement du frein à la couronne de frein (3) au moyen du manchon fileté (12), l'entraînement de l'organe de transmission (13, 13a, 22, 23, 24, 25) étant arrêté par la mise en contact du manchon fileté (12) contre la couronne de frein (3);
g) il est prévu des moyens de rappel qui, lors du mouvement de retour de l'élément écarteur (9, 12, 17), renvoient l'organe de transmission (13, 13a, 22, 23, 24, 25) à sa position de départ;
h) sur l'organe de transmission (13, 13a, 22, 23, 24, 25), est articulé un embrayage (15) qui agit uniquement dans le sens du rattrapage et qui, pendant l'entraînement de l'organe de transmission (13, 13a, 22, 23, 24, 25), accouple l'organe de transmission (13, 13a, 22, 23, 24, 25) et le manchon fileté (12) l'un à l'autre de telle manière que le manchon fileté (12) soit entraîné en rotation dans le sens du rattrapage et que, sous cet effet, l'élément écarteur en deux parties (9, 12, 17) soit allongé pour l'exécution du rattrapage.

2. Frein à disque à garniture totale selon la revendication 1, caractérisé par la caractéristique suivante: entre l'organe de transmission (13, 13a, 22, 23, 24, 25) et la couronne de frein (3) sont agencés des moyens de renvoi (13a, 14, 22, 23, 24, 25) par l'intermédiaire desquels l'organe de transmission (13, 13a, 22, 23, 24, 25) est tourné dans le sens du rattrapage lorsqu'il est entraîné par l'élément écarteur (9, 12, 17) et ramené en sens inverse lors du retour de l'élément écarteur (9, 12, 17).

3. Frein à disque à garniture totale selon la revendication 2, caractérisé en ce que les moyens de renvoi prévus pour la rotation et le mouvement de retour de l'organe de transmission (13, 13a) présentent les caractéristiques suivantes:
a) la surface frontale annulaire de l'organe de transmission (13, 13a) qui est dirigé vers la couronne de frein (3) est munie de premières surfaces de glissement inclinées;
b) la surface de la couronne de frein (3) dirigée vers l'organe de transmission (13, 13a) est munie de deuxièmes surfaces de glissement inclinées (14) qui sont en prise avec les premières surfaces de glissement inclinées.

4. Frein à disque à garniture totale selon la revendication 2, caractérisé en ce que les moyens de renvoi prévus pour la rotation et le mouvement de retour de l'organe de transmission (22, 23, 24, 25) présentent les caractéristiques suivantes:
a) les moyens de renvoi (22, 23, 24, 25) sont constitués par un mécanisme à leviers de genouillère qui est constitué par deux bras de leviers de genouillère (22, 23) reliés au moyen d'un axe de liaison (24) et par un galet (25) fixé à l'extrémité de l'un (23) des bras de leviers de genouillère;
b) le côté du mécanisme à leviers de genouillère (22, 23, 24, 25) qui est dirigé vers l'élément écarteur (9, 12, 17) est en liaison de coopération avec cet élément écarteur par l'intermédiaire du galet (25);
c) le côté du mécanisme à leviers de genouillère (22, 23, 24, 25) dirigé vers la couronne de frein (3) est fixé avec possibilité de rotation sur cette couronne de frein (3) par l'extrémité (26) de l'autre bras (22) de leviers de genouillère.

5. Frein à disque à garniture totale selon l'une des revendications précédentes, caractérisé par la caractéristique suivante: l'embrayage (15) est constitué par une bande de serrage qui entoure le manchon fileté (12).

6. Frein à disque à garniture totale selon l'une des revendications précédentes, caractérisé par la caractéristique suivante: le contre-filetage qui s'étend dans la direction axiale et qui établit la liaison de coopération avec le manchon fileté est prévu sur une formation (17) de la partie (9, 17) de l'élément écarteur (9, 12, 17) qui est montée bloquée en rotation.

7. Frein à disque à garniture totale selon l'une des revendications précédentes, caractérisé par les caractéristiques suivante:
a) le dispositif d'actionnement du frein est constitué par l'élément écarteur (8) réalisé sous la forme d'un cylindre annulaire (8) et l'élément écarteur (9, 12, 17) en au moins deux parties et extensible, réalisé sous la forme d'un piston annulaire (9, 12, 17) mobile en translation axiale dans ce cylindre et étanché par des bagues d'étanchéité;
b) une chambre annulaire (10) disposée entre le cylindre annulaire (8) et le piston annulaire (9, 12, 17) peut être alimentée par des fluides sous pression;
c) entre une surface frontale (9a) du piston annulaire (12, 17) qui est à l'opposé de la surface annulaire du piston annulaire (9, 12, 17) qui forme la chambre (10) et une formation (8) du cylindre annulaire (8), est disposé un ressort ondulé (19) dont la tension est dirigée vers la «position de desserrage du frein» du dispositif d'actionnement du frein.

8. Frein à disque à garniture totale selon l'une des revendications précédentes, caractérisé par les caractéristiques suivantes:
a) en tant que moyens de rappel, au moins un ressort de rappel (20) agissant sur l'organe de transmission (13, 13a, 22, 23, 24, 25) dans la direction circonférentielle est agencé au niveau du diamètre extérieur de l'organe de transmission (13, 13a ou 22, 23, 24, 25);
b) le ressort de rappel (20) prend appui entre une formation (21) du cylindre annulaire (8) qui est en forme de voile et une surface d'appui de l'organe de transmission (13, 13a ou 22, 23, 24, 25).

9. Frein à disque à garniture totale selon l'une des revendications 5 à 8, caractérisé par la caractéristique suivante: entre la bande de serrage (15) et l'organe de transmission (13, 13a ou 22, 23, 24, 25), est prévu un ressort ondulé annulaire (18).

10. Frein à disque à garniture totale selon l'une des revendications 5 à 9, caractérisé par la caractéristique suivante: pour la précontrainte de la bande de serrage (15), un ressort (16) est agencé à une extrémité de fixation de la bande de serrage (15) sur l'organe de transmission (13, 13a ou 22, 23, 24, 25).

11. Frein à disque à garniture totale selon l'une des revendications 5 à 10, caractérisé par les caractéristiques suivantes:
a) l'organe de transmission (13, 13a) muni des premières surfaces de glissement inclinées est composé de trois éléments distincts (13a) réunis rigidement les uns aux autres au moyen d'une couronne (13) et répartis régulièrement sur la périphérie de cette couronne (13);
b) la bande de serrage (15) est fixée à l'un des trois éléments distincts (13a).

FIG. 1a

20  8a  19  9a  9  8  11

14
13
15
12
1
5
3
17

10
2
6
4
7

FIG. 1b

3
21
5
20
13a
14
15

9a
4
6
19
9
8a

FIG. 2

18   13a

15

12

FIG. 3

12   13   15   16   13a   15

FIG. 4a

FIG. 4b